# NEW EUROPEAN PATENT SPECIFICATION

(11) **EP 0 958 999 B2**
(45) Date of publication and mention of the opposition decision: **29.08.2007**
(45) Mention of the grant of the patent: 14.04.2004
(21) Application number: 99303952.8
(22) Date of filing: 21.05.1999
(51) Int. Cl.: B64C 3/48

(54) **Aerofoil**
Flügelprofil
Profil aérodynamique

(30) Priority: 21.05.1998 US 82827
(43) Date of publication of application: 24.11.1999
(73) Proprietor: McDONNELL DOUGLAS CORPORATION, Saint Louis, MO 63166-0516 (US)
(72) Inventor: Gruensfelder, Cynthia Ann, St Louis, MO 63138 (US)
(74) Representative: McLeish, Nicholas Alistair Maxwell

(56) References cited:
- WO-A-40/00553
- US-A- 2 539 576
- US-A- 3 716 209
- US-A- 4 429 844
- US-A- 5 222 699
- US-A- 5 681 014
- US-A- 5 931 422

## Description

This invention related to an aerofoil and, more particularly but not exclusively to an aerofoil for an aircraft.

US Patent Specification 5,222,699 describes an aircraft trailing edge control surface having a variable contour transition region at least one end thereof whereby there is a smooth transition between the control surface when deflected relative to the wing and the wing trailing edge region itself. The control surface may also be flexible chordwise throughout its length. In order for this chordwise flexibility to be achieved. the upper skin of the control surface is arranged to slide under the surface of the main body of the wing.

US Patent Specification 4,429,844 describes an aircraft wing tip having variable camber to conform to a variable camber leading edge to the wing. The wing tip variable camber is achieved via scissor plates to which are attached elastomeric skins, the scissor plates being anchored to corresponding points in the leading edge control surfaces. Thus, as the flexing of the control surface inevitably affects the thickness of the wing tip at an adjacent point in the wing chord so the scissor plates permit both conforming thickening and flexing of the wing tip.

US Patent Specification 2,539,576, which was applied for in 1945, describes inflatable ice eliminating apparatus for use on the leading edge of an aircraft wing.

Priort art document WO/96/40553 discloses elastomeric transition regions reinforced by flexible rods sliding within elastomeric panels.

The shape of the edges of aircraft aerofoils, such as the leading edge of a wing, may be adjusted in use to enhance the operation of the aircraft. However, present adjustable leading edge designs expose slots that limit the performance of the wing. These slots result in pressure losses that limit the lift resulting from the aerofoil.

Thus there exists a need for a leading edge design that allows a wide range of shape tailoring without exposing gaps.

Another problem which is ever present is the need to remove ice from edges.

Certain aspects of the present invention address these problems.

According to the present invention there is provided an aerofoil according to the subject matter of claim 1.

Further features of the present invention are set out in Claim 2 et seq.

For a better understanding of the present invention, reference will now be made, by way of example, to the accompanying drawings, in which:-
Fig. 1 is a schematic diagram of a first embodiment of a leading edge of an aerofoil according to the invention;
Fig. 2 is a schematic diagram of the leading edge of Fig. 1 in a deflected and blunted state;
Fig. 3 is a cross sectional view of a second embodiment of a leading edge of an aerofoil according to the invention;
Fig. 4 is a top view of the leading edge of Fig.3;
Fig. 5 is a cross sectional view of a third embodiment of a leading edge of an aerofoil according to the invention;
Fig. 6 is a perspective view of a rod reinforced elastomer panel; and
Fig. 7 is a cross sectional view of an embodiment of an anti-icing edge for an aircraft.

### Detailed Description of the Drawings

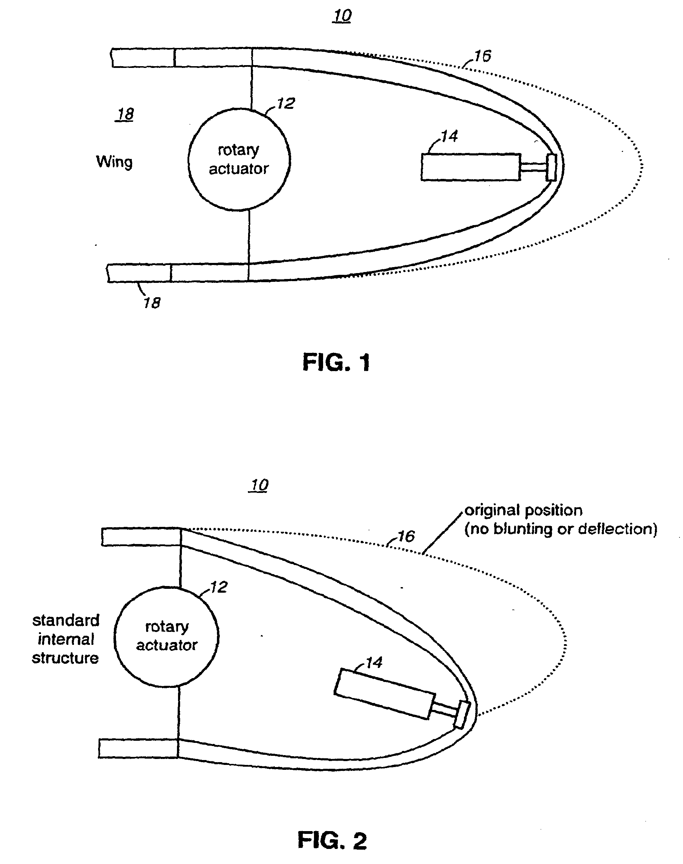

Fig. 1 is a schematic diagram of a leading edge 10 according to the invention. The leading edge 10 has a rotary actuator 12 for pivoting the leading edge 10. A linear actuator 14 is used for blunting the leading edge. The dashed lines 16 show the leading edge in an extended state. The leading edge is typically connected to the body 18 of the wing of an aircraft. Fig. 2 is a schematic diagram of the leading edge 10 of Fig. 1 in a deflected and blunted state. A reinforced elastomer panel is used to realize the gapless smooth curvilinear shape of the leading edge throughout its operating range, as will be discussed in more detail below.

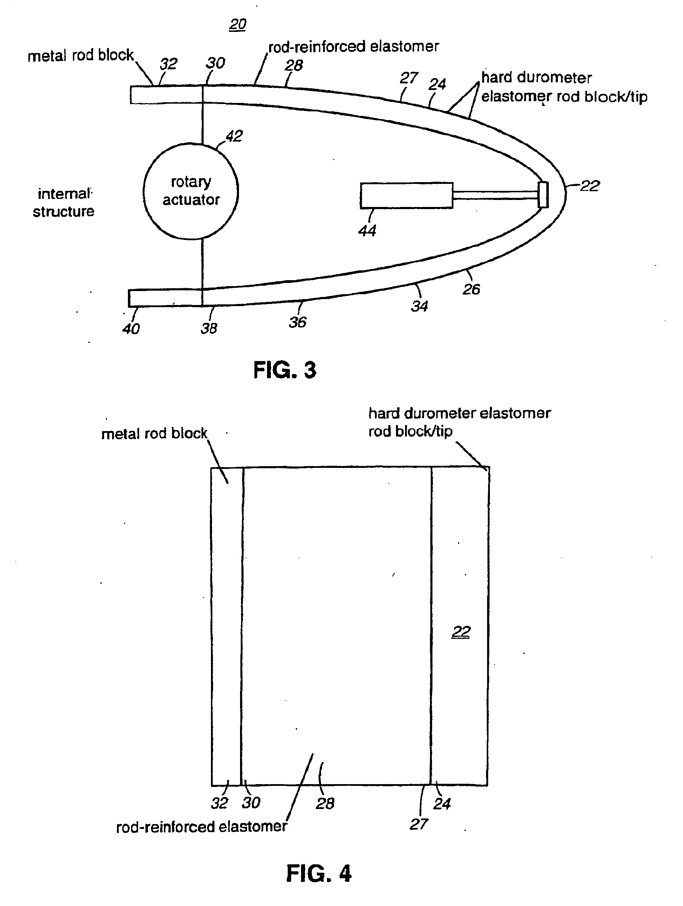

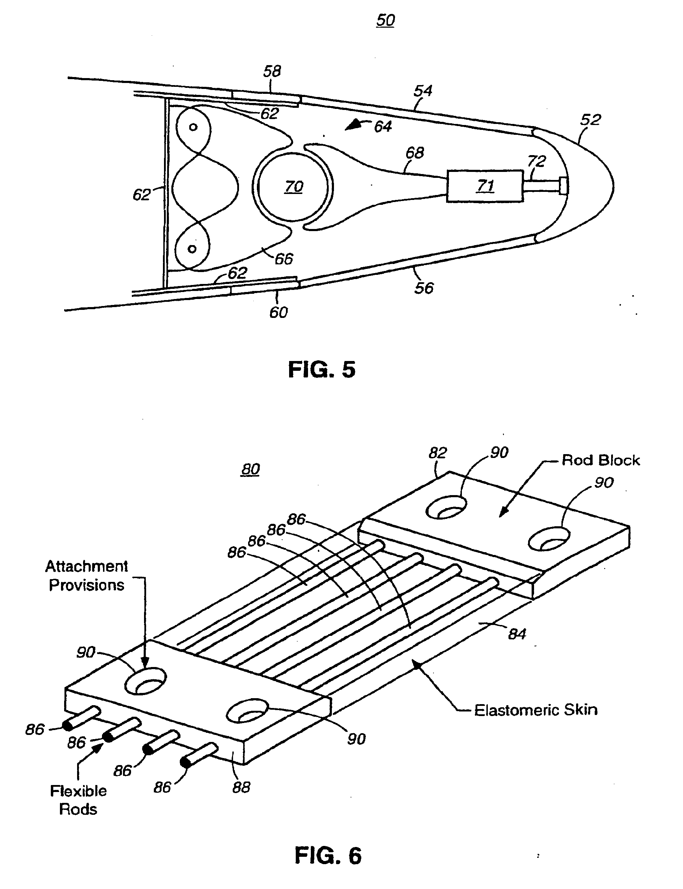

Fig. 3 is a cross sectional view of an embodiment of a leading edge 20 according to the invention. A hard durometer elastomer tip 22 has a first edge 24 and a second edge 26. The first edge 24 of the hard durometer elastomer tip 22 is connected to a first edge 27 of a first reinforced elastomer panel 28. In one embodiment a plurality of reinforcing members are attached to the hard durometer elastomer tip 22. These reinforcing members slide within the first reinforced elastomer panel 28. The reinforced elastomer panel will be discussed in more detail in conjunction with Fig. 6. A second edge 30 of the fist reinforced elastomer panel 28 is connected to a first rigid block 32. In one embodiment the first rigid block 32 is made of a metal. The first rigid block 32 is attached to the body of the wing of the aircraft. The second edge 26 of the hard durometer elastomer tip 22 is connected to a first edge 34 of a second elastomer panel 36. A second edge 38 of the second elastomer panel 36 is connected to a second rigid block 40. The leading edge includes a rotary actuator 42 and a blunting actuator 44. The rotary actuator 42 deflects the leading edge up or down and the blunting actuator 44 pushes the tip 22 in and out. Fig. 4 is a top view of the leading edge of Fig. 3. This view shows the tip 22 connected to the reinforced elastomer panel 28 and the rigid block 32. At an outer edge of the wing in one embodiment a transition section connects to the body of the wing. The transition section is included at an inner edge of the leading edge in one embodiment. As can be seen from this embodiment the invention provides for a leading edge that does not have any gaps and provides a wide range of shape tailoring for the leading edge.

Fig. 5 is a cross sectional view of an embodiment of a leading edge 50 according to the invention. The leading edge 50 has a hard durometer elastomer tip 52. A reinforced elastomer panel 54 connects to the tip 52. A second reinforced elastomer panel 56 connects to the other side of the tip 52. Both reinforced elastomer panels 54, 56, which form working surfaces of the aerofoil, have a rigid block 58, 60 that attaches to the body 62 of the wing of the aircraft. A skeletal structure 64 is attached to the body of the wing of the aircraft. The skeletal structure includes a base 66 connected to a rotor 68 by a rotary actuator 70. A blunting actuator 71 has a piston 72 that moves the tip 52 from a blunt state (retracted position) to an extended state (extended position).

Fig 6. is a perspective view of a rod reinforced elastomer panel 80. The elastomer panel 80 has a rod block 82 attached along one edge to an elastomer skin 84. The elastomer skin 84 is capable of stretching to 100% of its unstressed length. In addition, the elastomer skin 84 is capable of twisting. A plurality of flexible reinforced rods 86 are attached to the rod block 82 and are allowed to slide freely inside the elastomer skin 84. In the embodiments shown in the drawings the leading edge of the rods 86 are attached to the hard durometer tip. The rods 86 are made from quartz, epoxy or composites and flex without breaking. The stiffness of these reinforcements is designed to yield a specific extended shape. The rods 86 slide freely inside a second rod block 88. The rods 86 provide the elastomer skin 84 with a smooth curvilinear shape when the elastomer panel 80 is elongated, deflected or twisted. This curvilinear shape provides a good aerodynamic shape without any discontinuities that cause turbulence and drag. A plurality of attachment provisions 90 are used to attach the elastomer panel 80 to the body of the wing of the aircraft.

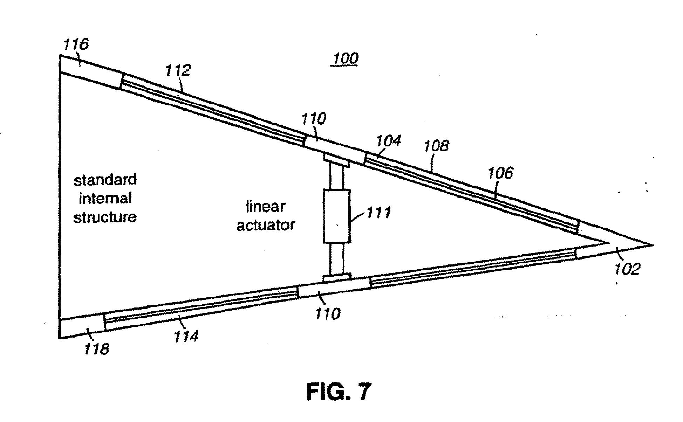

Fig. 7 is a cross sectional view of an embodiment of an anti-icing edge 100 for the trailing edge of a wing of an aircraft. A hard durometer elastomer tip 102 is connected to a first reinforced elastomer panel 104. A reinforcing member 106 is shown inside the elastomer. A second reinforced elastomer panel 108 is connected to the other side of the hard durometer tip 102. A pair of center rigid blocks 110 are connected to the elastomer panels 104, 108. An actuator (anti-icing) 111 is shown connected between the pair of center rigid blocks 110. A third reinforced elastomer 112 and a fourth reinforced elastomer panel 114 are connected to the pair of center rigid blocks 110. A pair of inner rigid blocks 116, 118 attach to the body of the wing of the aircraft. By moving the actuator 111 the reinforced elastomer panels 104, 108, 112 114 are forced to deflect. Any ice attached to the structure 100 is cracked and popped off the edge.

Thus there has been described a leading edge that allows a wide range of shape tailoring without exposing gaps. In addition, a de-icing edge has been described. In one embodiment the leading edge and de-icing edges are combined into a single edge. While the invention has been described in conjunction with specific embodiments thereof, it is evident that many alterations, modification and variations will be apparent to those skilled in the art in light of the foregoing description. For instance, the reinforcing rods can be replaced with reinforcing slats.

It will be appreciated that for de-icing purposes it is not necessary that the reinforced elastomer panels 54, 56 be positioned hard against the body of the wing. However, this feature is most desirable to optimize the lift characteristics of the aerofoil.

The hard durometer elastomer tip 22 is preferably made of an elasomeric material having a shore A hardness of from 32 or below to 55 or above. Silastic™ J (shore A hardness 55) and EL™ 78 (Shore A hardness 32) both appear satisfactory.

The elastomeric material in the rod reinforced elastomer panels 28, 80 may comprise silicone and the reinforcing rods themselves can comprise a quartz epoxy.

## Claims

1. An aerofoil (18) having a body and a leading edge comprising a tip (22,52), upper and lower elastomeric panels (28, 36, 54, 56,) constituting working surfaces, the panels each having a plurality of reinforcing members (86) therein, and actuator means (12, 42, 70) arranged for pivotting the leading edge and flexing the panels and wherein the tip (22, 52) is formed of a hard durometer elastomer and defines upper and lower edges (24, 26) for attachment to the upper and lower elastomeric panels, the actuator means is attached to the tip, the reinforcing members (86) are freely slidable within the panels (28, 36, 54, 56); the panels (54, 56, 108) are attached at their outer ends to the tip (22, 58); and the panels (28, 36, 54, 56) culminate at their inner ends in rigid blocks (32, 40, 58, 60) which are attached to the aerofoil (18); whereby there is unbroken continuity between the aerofoil, the panels and the tips.

2. An aerofoil as claimed in claim 1 and having a blunting actuator (14, 44, 71, 72) for extending and shortening the edge.

3. An aerofoil as claimed in claim 2 and including a skeletal structure (68) pivotally connected to the body and supporting the blunting actuator.

4. An aerofoil as claimed in any one of claims 1 to 3 and wherein the actuator means for flexing the panels is a rotary actuator (12, 42, 70).

5. An aerofoil as claimed in any one of the preceding claims and wherein the reinforcing members (86) are rigidly attached to the tip (22, 52) and slide in the rigid blocks (58, 60).

6. An aerofoil as claimed in any one of the preceding claims and having a trailing edge with a hard durometer elastomer tip (102), the upper surface of the trailing edge comprising connected one to another in sequence a rigid block (116), a reinforced elastomer panel (112), a rigid block (110), and a reinforced elastomer panel (104), the lower surface of the trailing edge comprising connected one to another in sequence a rigid block (118), a reinforced elastomer panel (114), a rigid block (110), and a reinforced elastomer panel (108), the blocks (116,118) being also attached to the body of the wing and the panels (104, 108) being also attached to the hard durometer tip(102) and there being an actuator (111) acting between the upper and the lower blocks (110) to detach ice from the upper and lower surfaces.

## Patentansprüche

1. Tragfläche (18), mit einem Körper und einer Vorderkante, die eine Spitze (22, 52) aufweist, oberen und unteren elastomeren Platten (28, 36, 54, 56), die Arbeitsoberflächen bilden und jeweils mehrere Verstärkungselemente (86) enthalten, und Aktuatormitteln (12, 42, 70), die so beschaffen sind, dass sie die Vorderkante schwenken und die Platten biegen, wobei die Spitze (22, 52) aus einem harten Durometer-Elastomer gebildet ist und eine obere und eine untere Kante (24, 26) für die Befestigung an der oberen bzw. der unteren Platte definiert, wobei die Aktuatormittel an der Spitze befestigt sind, wobei die Verstärkungselemente (86) in den Platten (28, 36, 54, 56) frei gleiten können; die Platten (54, 56, 108) an ihren äußeren Enden an der Spitze (22, 58) befestigt sind; und die Platten (28, 36, 54, 56) an ihren inneren Enden in starren Blöcken (32, 40, 58, 60) kulminieren, die an der Tragfläche (18) befestigt sind; wobei die Tragfläche, die Platten und die Spitzen ohne Unterbrechung ineinander übergehen.

2. Tragfläche nach Anspruch 1, mit einem Stumpfmachungsaktuator (14, 44, 71, 72), der die Kante ausfährt und verkürzt.

3. Tragfläche nach Anspruch 2, mit einer Skelettstruktur (68), die an dem Körper angelenkt ist und den Stumpfmachungsaktuator unterstützt.

4. Tragfläche nach einem der Ansprüche 1 bis 3, bei der die Betätigungsmittel zum Biegen der Platten ein Drehaktuator (12, 42, 70) sind.

5. Tragfläche nach einem der vorhergehenden Ansprüche, bei der die Verstärkungselemente (86) an der Spitze (22, 52) starr befestigt sind und in den starren Blöcken (58, 60) gleiten.

6. Tragfläche nach einem der vorhergehenden Ansprüche, die eine Hinterkante mit einer harten Durometer-Elastomer-Spitze (102) besitzt, wobei die obere Oberfläche der Hinterkante in gegenseitiger Verbindung nacheinander einen starren Block (116), eine verstärkte elastomere Platte (112), einen starren Block (110) und eine verstärkte elastomere Platte (104) umfasst, wobei die untere Oberfläche der Hinterkante in gegenseitiger Verbindung nacheinander einen starren Block (118), eine verstärkte elastomere Platte (114), einen starren Block (110) und eine verstärkte elastomere Platte (108) umfasst, wobei die Blöcke (116, 118) außerdem am Körper des Flügels befestigt sind und die Platten (104, 108) außerdem an der harten Durometer-Spitze (102) befestigt sind und wobei ein Aktuator (111) vorhanden ist, der zwischen dem oberen und dem unteren Block (110) wirkt, um Eis von der oberen und von der unteren Oberfläche zu lösen.

## Revendications

1. Profil aérodynamique (18) ayant un corps et un bord d'attaque comprenant une extrémité (22, 52), des panneaux élastomères supérieurs et inférieurs (28, 36, 54, 56) constituant des surfaces actives, les panneaux ayant chacun une pluralité d'éléments de renforcement (86) à l'intérieur, et un moyen actionneur (12, 42, 70) disposé pour faire pivoter le bord d'attaque et fléchir les panneaux, et dans lequel l'extrémité (22, 52) est formée d'un élastomère dur au duromètre et définit des bords supérieur et inférieur (24, 26) en vue d'une fixation aux panneaux élastomères supérieur et inférieur, le moyen actionneur est fixé à l'extrémité, les éléments de renforcement (86) peuvent librement coulisser à l'intérieur des panneaux (28, 36, 54, 56) ; les panneaux (54, 56, 108) sont fixés à leurs extrémités externes à l'extrémité (22, 58) ; et les panneaux (28, 36, 54, 56) culminent à leurs extrémités internes dans des blocs rigides (32, 40, 58, 60) qui sont fixés au profil aérodynamique (18) ; ainsi, il y a continuité sans interruption entre le profil aérodynamique, les panneaux et les extrémités.

2. Profil aérodynamique selon la revendication 1, ayant un actionneur d'émoussement (14, 44, 71, 72) pour prolonger et raccourcir le bord.

3. Profil aérodynamique selon la revendication 2, comprenant une structure squelettique (68) connectée de façon pivotante au corps et supportant l'actionneur d'émoussement.

4. Profil aérodynamique selon l'une quelconque des revendications 1 à 3, dans lequel le moyen actionneur pour fléchir les panneaux est un actionneur rotatif (12, 42, 70).

5. Profil aérodynamique selon l'une quelconque des revendications précédentes, dans lequel les éléments de renforcement (86) sont attachés de façon rigide à l'extrémité (22, 52) et glissent dans les blocs rigides (58, 60).

6. Profil aérodynamique selon l'une quelconque des revendications précédentes, ayant un bord de fuite avec l'extrémité élastomère dur au duromètre (102), la surface supérieure du bord de fuite comprenant, connectés les uns aux autres successivement, un bloc rigide (116), un panneau élastomère renforcé (112), un bloc rigide (110) et un panneau élastomère renforcé (104), la surface inférieure du bord de fuite comprenant, connectés les uns aux autres successivement, un bloc rigide (118), un panneau élastomère renforcé (114), un bloc rigide (110) et un panneau élastomère renforcé (108), les blocs (116, 118) étant également fixés au corps de l'aile et les panneaux (104, 108) étant également fixés à l'extrémité dure au duromètre (102) et un actionneur (111) étant prévu pour agir entre les blocs supérieur et inférieur (110) pour dégivrer la glace des surfaces supérieure et inférieure.
